# EUROPEAN PATENT APPLICATION

(11) **EP 1 553 434 A1**
(43) Date of publication of application: **13.07.2005**
(21) Application number: 05250023.8
(22) Date of filing: 06.01.2005
(51) Int. Cl.: G02B 7/10

(54) **Automatic focusing system**

(30) Priority: 08.01.2004 JP 2004002658
(71) Applicant: CANON KABUSHIKI KAISHA, Ohta-ku, Tokyo (JP)
(72) Inventor: Idemura, Takeshi, Ohta-ku Tokyo (JP)
(74) Representative: Beresford, Keith Denis Lewis

(57) **Abstract**

A lens apparatus is disclosed, in which an in-focus state obtained by a manual focus can be adjusted by the assistance of an automatic focus with good response. The lens apparatus comprises a lens system which includes, in order from an object side, a first focusing lens (1) for manual focus, a magnification-varying lens (3), and a second focusing lens for automatic focus (7); a first operating member (14) for the automatic focus; an actuator (8) which drives the second focusing lens; and a controller (15). The controller performs the automatic focus control in accordance with an operation of the first operating member, in a state in which the position of the first focusing lens at the time of the operation of the first operating member is maintained.

## Description

The present invention relates to lens apparatuses suitable for image-taking system, especially image-taking system for television image-taking.

In general, optical systems for TV lenses used for television image-taking or the like are composed of, in order from an object side, a front focusing lens unit, a zoom lens unit (magnification-varying lens unit) including a variator and compensator, and an image-forming lens unit for image formation on a CCD, as disclosed in U.S.Patent no.5,515,204, and when focusing on the object, the front focusing lens unit is manually operated.

However, TV lenses having a higher resolving power and shallower depth of focus than the conventional TV lenses have been frequently used because of the spread of the HD camera in recent years. In a case where a portable type-image-taking system with a lens having such a shallow depth of focus, which is shouldered by a cameraman, is used, it is difficult for the cameraman to judge whether it is an in-focus state or not through a small viewfinder of the image-taking system, and the number of cases, where a slight out-of-focus image is found out when confirming the taken images by a monitor even if the cameraman has intended to focus on the object, increases.

To deal with such a problem, recently, a TV lens is proposed in U.S.Patent no. 5,912,774, which has an automatic focus (hereinafter, it is referred to as AF) function in addition to a manual focus function. In this TV lens, the front focusing lens unit is operated manually for the manual focus, and the change of image signals is detected by wobbling a part of the image-forming lens unit and then the front focusing lens is driven in a direction in which the defocus amount reduces.

Moreover, as another example, a lens apparatus is proposed in U.S.Patent no. 4,609,260, in which the front focusing lens unit is operated manually for the manual focus, and a part of the image-forming lens unit is driven for AF after the front focusing lens unit has been operated manually and locked to the infinite end.

However, the TV lens of U.S.Patent no. 5,912,774 cannot obtain a high response that is necessary for AF and consumes large electric power because the front focusing lens unit with a large mass is driven during AF operation. Moreover, since the front focusing lens unit is driven in both the manual focus and the AF, there is a problem that a changing mechanism corresponding to these focus modes is needed and thereby the structure of the TV lens is complicated.

Furthermore, in the lens apparatus of U.S.Patent no. 4,609,260, it is necessary to operate and lock the front focusing lens unit to the infinite end in AF though a high response can be obtained because the mass of the driven lens in AF is small.

If AF is always used, such procedure for changing the focus mode does not become a problem. However, in a case where the manual focus mode and the AF mode are used selectively, it is difficult to change the manual focus mode to the AF mode instantaneously, and it is necessary to operate the front focusing lens unit from the infinite end when returning from the AF mode to the manual focus mode. This is inconvenient.

Professional cameramen who handle the TV lens (television image-taking system) operate the focusing lens manually because they get not only an in-focus state but also an out-of-focus state intentionally for a camera effect, and the current AF performance is not enough for taking an image that they want under various image-taking conditions, etc.

Especially, the manual focus that can be operated in hand is an indispensable condition for a high professional cameraman who is absorbed in an image making with a HD lens with a high resolving power.

On the other hand, because it is a lens with high resolving power, it is difficult to confirm the degree of focusing by a small image of the viewfinder in some image-taking conditions. The lens that can help focusing by AF only when the necessity of fine-tuning is caused is an ideal appearance though the manual focus functions enough under usual conditions. Furthermore, it is hoped to be able to operate the focusing lens manually again after AF finished.

A concern of the present invention is to provide a lens apparatus that can assist the manual focus by the automatic focus with good response and an image-taking system with the same.

One aspect of the present invention is a lens apparatus, which comprises a lens system which includes, in order from an object side, a first focusing lens for manual focus, a magnification-varying lens, and a second focusing lens for automatic focus; a first operating member which is operated to execute the automatic focus; an actuator which drives the second focusing lens; and a controller which performs an automatic focus control of the actuator. The controller performs the automatic focus control in accordance with an operation of the first operating member, in a state in which the position of the first focusing lens at the time of the operation of the first operating member is maintained.

Other objects and further features of the present invention will become readily apparent from the following description of the preferred embodiments with reference to accompanying drawings.
Fig. 1 is a system block diagram showing the structure of a TV lens that achieves the manual focus and AF in Embodiment 1 of the present invention.
Fig. 2 is a chart showing the relation between the position of the image-forming lens unit and the contrast value in AF in Embodiment 1.
Fig. 3 is a flowchart explaining the AF function in Embodiment 1.
Fig. 4 is a system block diagram showing the structure of a TV lens that achieves the manual focus and AF in Embodiment 2 of the present invention.

A description will now be given of the preferred embodiments of the present invention by referring to the accompanying drawings.

### [Embodiment 1]

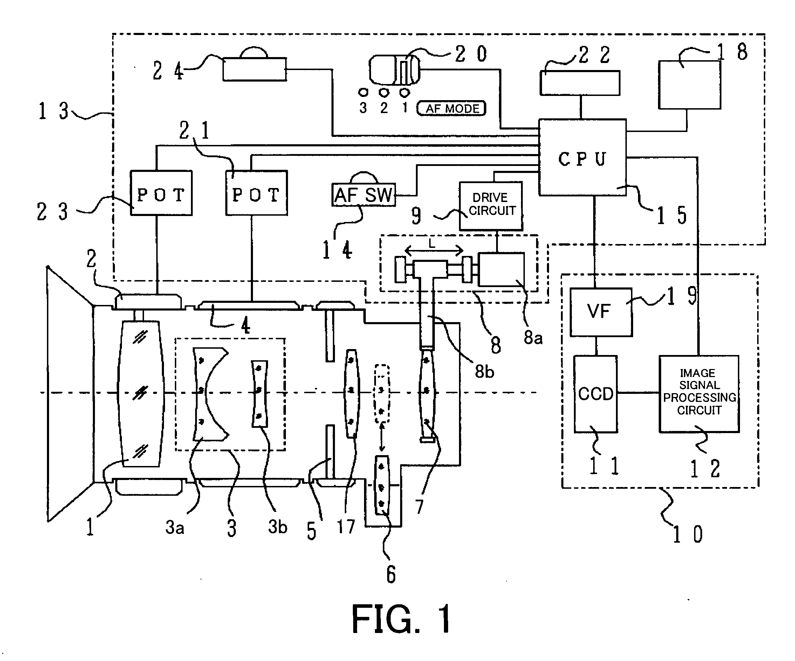

Fig. 1 is a system block diagram showing the structure of a TV lens and an image-taking system with the same that achieves a manual focus and AF in Embodiment 1 of the present invention.

In Fig. 1, the reference numeral 1 denotes a front focusing lens unit as a first focusing lens, and the reference numeral 2 denotes a focus operating ring as a second manual operating member. The front focusing lens unit 1 is connected directly with the focus operating ring 2. Since the focus operating ring 2 that can be rotationally operated has the operation ends, the user can understand whether the front focusing lens unit 1 is on an infinite side or on a close side by his operating sense.

The reference numeral 3 denotes a zoom (magnification-varying) lens unit constituted by a variator unit 3a for varying the magnification (focal length) and a compensator 3b for correcting an image-plane position. The zoom lens unit 3 is moved on an optical axis by the rotational operation of a zoom ring 4.

The reference numeral 5 denotes an iris (diaphragm) unit, and the reference numeral 17 denotes a relay lens unit for making rays afocal. The reference numeral 6 denotes an extender lens unit that can be inserted on and removed from the optical axis, and the extender lens unit 6 doubles the focal length of the lens system when inserted on the optical axis.

The reference numeral 7 denotes an image-forming lens unit that can be driven in the direction of the optical axis by a driving unit 8 consisting of a pulse motor 8a and a lead screw 8b. The reference numeral 9 denotes a drive circuit 9 that drives the pulse motor 8a. The image-forming lens unit 7 has not only the role that forms an object image on an image-forming plane but also the role as a second focusing lens unit that is located closer to an image side than the zoom lens unit 3 in this embodiment. The lens that is driven as the second focus unit may not be the entire image-forming lens unit 7 but a part of the image-forming lens unit 7.

The reference numeral 13 denotes a drive unit that is mounted to the TV lens and incorporates drive parts to drive the TV lens. A CPU 15 as a controller is provided in the drive unit 13. The drive unit 13 and the parts of the reference numerals 1 to 8 constitute a lens apparatus in this embodiment.

The reference numeral 10 denotes a camera. In the camera 10, an object image formed by the above-mentioned lens system is photoelectrically converted by an image-pickup device 11 such as a CCD sensor or CMOS sensor, the output signals from the image-pickup device 11 are converted into digital video signals by an image signal processing circuit 12.

The user (cameraman) operates the focus operating ring 2 that is connected directly to the front focusing lens unit 1 when performing the manual focus.

Here, when AF is needed after the manual focus has been done, the cameraman operates an AF switch 14 as a first operating member. At this time, the position of the front focusing lens unit 1 is maintained to the position at the time of the operation of the AF switch 14.

It is desirable to provide the AF switch 14 to a position on the top surface of the drive unit 13 for convenience, which is a surface in the vicinity of the TV lens, though there is no limitation on the position of the AF switch 14.

The CPU15 outputs a minute drive instruction signal to the drive circuit 9 in accordance with the operation of the AF switch 14, and the drive circuit 9 wobbles the image-forming lens unit 7 as the second focusing lens via the driving unit 8 in the direction of the optical axis. Since the mass of the image-forming lens unit 7 is lighter than the front focusing lens unit 1, the image-forming lens unit 7 can be driven at a high speed with good response that is indispensable to AF. Moreover, since the image-forming lens unit 7 is light, it is possible to drive the image-forming lens unit 7 with low power consumption by a small motor.

At this time, the CPU15 takes the video signal from the image signal processing circuit 12 in the camera 10, and calculates the contrast value of each frame of the video image on the basis of the high frequency component of the video signal.

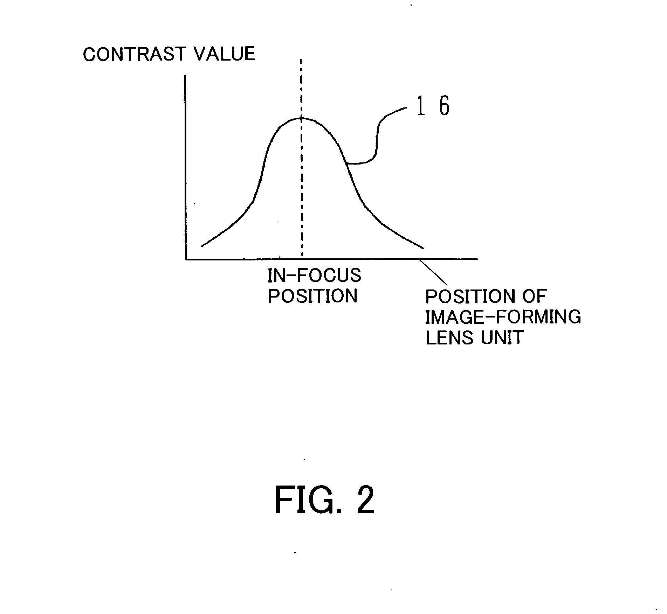

Fig. 2 shows the relation between the position of the image-forming lens unit 7 and the contrast value at the time of AF in this embodiment. The value of the contrast signal 16 increases with approaching the in-focus state though the value of the contrast signal 16 is low in the out-of-focus state as shown in the figure. The CPU15 moves the image- forming lens unit 7 to a position where the value of the contrast signal 16 reaches the maximum value.

The lens system in this embodiment has two focusing lens units 1 and 7 that sandwiches the zoom lens unit 3, and the image-forming lens unit 7 is driven in accordance with the operation of the AF switch 14 regardless of the position of the front focusing lens unit 1. Therefore, the driving distance of the image-forming lens unit 7, which is necessary to focus on the object, changes according to the position of the front focusing lens unit 1 and the zoom lens unit 3.

For instance, when the front focusing lens unit 1 is located on the infinite end, the driving distance of the image-forming lens unit 7 increases as the object is closer.

Therefore, to control the image-forming lens unit 7 for focusing so that all conditions may be satisfied with respect to all objects from the closest position to the infinite position and with respect to all zoom positions from the telephoto end to the wide-angle end regardless of the position of the first focusing lens unit 1, a long moving distance of the image-forming lens unit 7 is needed. This results in making the TV lens longer, and it is not desirable for, especially, a TV lens of ENG type that is shouldered by a cameraman.

For such reasons, making the lens longer is prevented by giving the limitation to the moving distance of the image-forming lens unit 7 as the second focusing lens so that the image-forming lens unit 7 may be driven only within a predetermined moving range in this embodiment. Therefore, the function to stop the lens drive when the moving distance exceeds the predetermined moving range L is equipped by putting the limitation on the driving range of the lead screw 8b.

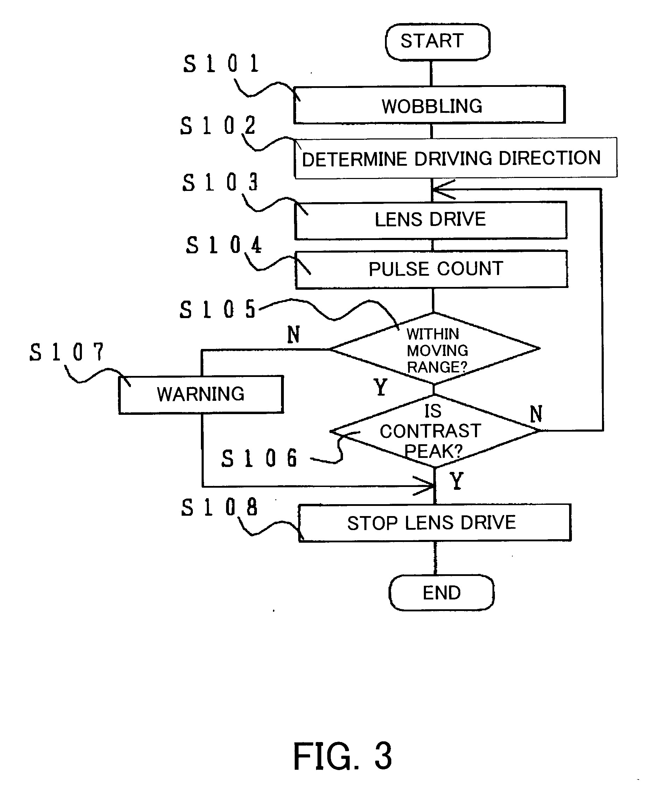

This function of the CPU 15 will be explained below by using the flowchart in Fig.3. The CPU 15 wobbles the image-forming lens unit 7 in accordance with the operation of the AF switch 14 as the first operating member (S101), determines the driving direction of the image-forming lens unit 7 on the basis of the contrast value of the video image signal (S101), and drives the image-forming lens unit 7 with the pulse motor 8a (S103). The CPU 15 counts the number of the driving pulse applied to the pulse motor 8a at this time (S104).

Here, in a case where the position of the image-forming lens unit 7 is within the moving range L, that is, the number of the counted driving pulse is equal to the predetermined pulse number or less, and the contrast value of the video image signal does not reach the peak (S106), the CPU 15 repeats S103 to S105 again. In a case where the CPU 15 judged that the contrast value of the video image signal has reached the peak (S106), that is, the in-focus state has been obtained, the CPU 15 stops driving the image-forming lens unit 7 (S108).

Moreover, in a case where the number of the counted driving pulse has reached the predetermined pulse number in S105, and the CPU 15 judged that the position of the image-forming lens unit 7 is on the end of the moving range L, the CPU 15 displays a warning that shows the in-focus state will not be obtained in S107, and stops driving the image-forming lens unit 7 even if the contrast value of the video image signal does not reach the peak (S108). The warning is displayed in the viewfinder 19 of the camera 10 in addition to a display portion 18 on the exterior surface of the drive unit 13.

Thus, by setting the limitation to the moving range of the image-forming lens unit 7, both the manual focus and AF functions can be used with quick switching without making the lens longer.

The in-focus state cannot be obtained in all image-taking conditions by the AF function. However, using the manual focus that can be operated quickly in hand is a basic style for image-taking for a professional cameraman who uses the TV lens, and the cases to use AF from a very out-of-focus state are extremely few.

The professional cameraman prefers the function that assists focusing quickly when he hesitates over judging whether it is the in-focus state or not through a small viewfinder during the manual focus operation of the HD lens with high resolving power. Therefore, the moving range L of the image-forming lens unit 7 is set to a range assumed to be necessary, for instance, a range that the image-forming lens unit 7 can correct about five times depth of focus.

Moreover, since the AF functions in accordance with the operation of one pushbutton (AF switch 14) without any mode changing operations between the manual focus and the AF in this embodiment, it is possible to shift from the manual focus to the AF instantaneously in the above-mentioned image-taking situation, and thereby quick and accurate focusing becomes possible. Furthermore, since the warning is displayed when the in-focus state cannot be obtained, the cameraman easily knows whether it is in the in-focus state or not during the AF.

Moreover, although the image-forming lens unit 7 is stopped at a predetermined reference position during the manual focus, the image-forming lens unit 7 is moved from the reference position during the AF. In the AF operation, since the image-forming position of the lens system changes by driving the zoom lens unit 3, the CPU15 reads out position information from a potentiometer 21 that detects the position of the zoom ring 4 and movement amount data of the image-forming lens unit 7 corresponding to each zoom position from a memory 22, drives the image-forming lens unit 7 based on the information and the data, and maintains the image-forming position constantly.

In Fig.1, the reference numeral 20 denotes a mode switch for AF, and the AF functions only once when a mode 1 is set by the AF switch 14. This mode 1 is used mainly when the focus is fine-tuned for a stationary object. On the other hand, a mode 2 is a mode in which the AF functions continuously while the AF switch 14 is pushed. Using this mode 2 for focusing on a moving object approaching the camera gradually is convenient. A mode 3 is a mode in which the AF switch 14 functions as an alternate switch. In the mode 3, the AF works when the AF switch 14 is pushed and stops when the AF switch 14 is pushed again.

Since the cameraman supports the TV lens with his right hand when he shoulders the lens, he will operate all switches and operation rings with his left hand. In this mode 3, the cameraman pushes the AF switch 14 with his left hand, and he can operate the zoom and iris manually while making the AF function.

Moreover, when the focus operating ring 2 is operated during the AF drive in this mode 3, the CPU15 judges that it is in the manual operation from the detection result of a potentiometer 23, and stops the AF drive to change to the manual mode. Thus, it is possible to select the specification of the AF switch 14 from the above-mentioned three modes according to image-taking situations.

Next, the processing after the AF will be explained. Although the focus state can be further changed by operating the front focusing lens unit 1 manually after the AF finished, a situation that an in-focus state on a faraway object is not obtained generates when the front focusing lens unit 1 is operated to the infinite end manually in a case where the position of the image-forming lens unit 7 is away from the reference position after the AF finished.

Therefore, a return switch 24 as a third operating member is installed in the TV lens, which makes the image-forming lens unit 7 return to the reference position, that is, a position where an in-focus state can be obtained when the front focusing lens unit 1 is located at the infinite end. Thereby the manual focus operation becomes possible as usual after the AF finished.

### [Embodiment 2]

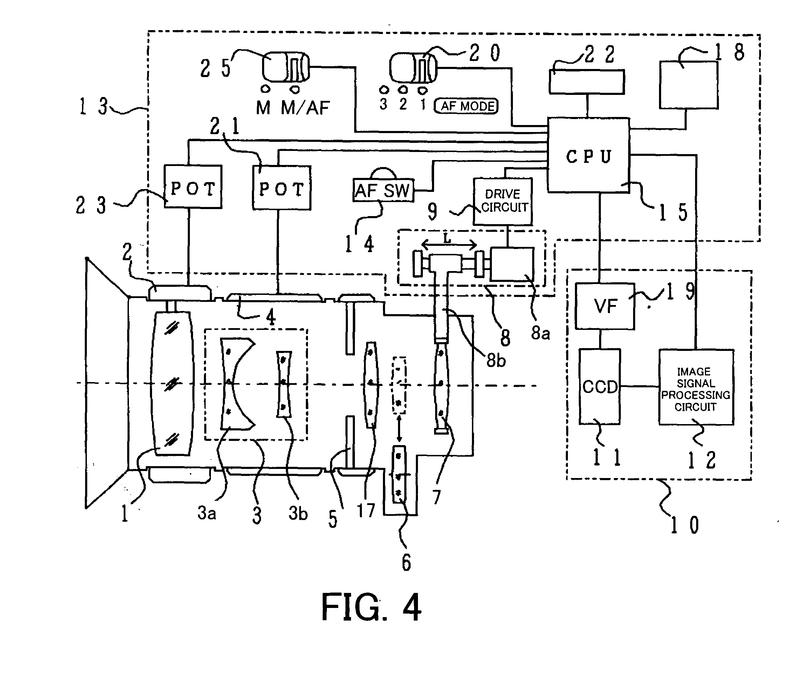

Fig.4 shows the structure of a TV lens in Embodiment 2 of the present invention. Since the same reference numerals in Fig.4 as Fig.1 denote the same structural members in Fig.1, explanations of those members will be omitted.

The present embodiment is characterized in having a manual mode in which only the manual focus can be used and a combination focus mode in which the manual focus and the AF can be used, and in installing a mode change switch 25.

Although the focus operation is mostly performed manually in the TV lens (TV image-taking system), if the AF switch 14 installed in the drive unit 13 is operated by mistake while taking images, a fatal trouble will be invited.

Therefore, the mode change switch 25 is installed in this embodiment, and the AF is prevented from working even if the AF switch 14 is pushed in the manual mode. Moreover, in the combination focus mode, the manual focus can be normally used, and the AF can work in accordance with the operation of the AF switch 14 if necessary.

Although the manual focus is available with the front focusing lens unit 1 after the AF finished, the image-forming lens unit 7 is returned to the reference position when the mode change switch 25 is returned to the manual focus mode, and thereby the manual focus as usual becomes possible. Therefore, the return switch 24 for only returning the image-forming lens unit 7 to the reference position in Embodiment 1 is omitted in this embodiment.

Thus, wrong operations of the AF switch and the return switch for the image-forming lens unit 7 can be prevented in this embodiment.

As a result, quickly shifting from the manual focus to the automatic focus becomes possible, and it becomes possible to assist in focusing with good response and low power consumption.

As explained above, according to each embodiment, a lens apparatus and an image-taking system with the same can be achieved, in which the in-focus state obtained by the manual focus can be adjusted by the assistance of the automatic focus with good response according to the necessity.

Moreover, the focus assistance function by the automatic focus can be achieved without making the lens longer by limiting the movement of the second focusing lens so that it may not be moved beyond a predetermined moving range.

Moreover, the cameraman can easily know whether the in-focus state can be obtained or not by warning when the in-focus state has not been obtained within the predetermined moving range of the second focusing lens.

Moreover, the manual focus operation becomes possible at once after the automatic focus by stopping the drive of the second focusing lens when the movement of the first focusing lens has been detected during the automatic focus operation with the second focusing lens.

Moreover, the focus operations according to cameraman's various intentions become possible by being able to select the above-mentioned three AF modes.

Furthermore, the manual focus operation as usual after the automatic focus becomes possible by returning the second focusing lens to its reference position in accordance with the operation of the first operating member.

## Claims

1. A lens apparatus which comprises a lens system including, in order from an object side, a first focusing lens for manual focus, a magnification-varying lens, and a second focusing lens for automatic focus; a first operating member which can be operated to execute the automatic focus; an actuator for driving the second focusing lens; and a controller for performing an automatic focus control of the actuator, **characterized in that**
the controller is arranged to perform the automatic focus control in accordance with operation of the first operating member, in a state in which the position of the first focusing lens at the time of the operation of the first operating member is maintained.

2. The lens apparatus according to claim 1, which further comprises a first detector for detecting a focus state that changes in accordance with a movement of the second focusing lens.

3. The lens apparatus according to claim 2, wherein the controller is arranged to perform a warning operation in a case where in-focus information is not obtained from the first detector by the movement of the second focusing lens in a predetermined moving range.

4. The lens apparatus according to any one of claims 1 to 3, wherein the controller is arranged to control the actuator so that the second focusing lens is not moved beyond a predetermined moving range.

5. The lens apparatus according to any one of claims 1 to 4, further comprising a second detector for detecting movement of the first focusing lens; and a second operating member which can be operated to execute the manual focus, wherein the controller is arranged to stop the automatic focus control in a case where the second detector detects the movement of the first focusing lens during the automatic focus control.

6. The lens apparatus according to any one of claims 1 to 5, further comprising a mode selection switch for selecting a focus mode, wherein the controller is arranged to perform the automatic focus control only once in accordance with the operation of the first operating member in a case where a first mode is selected by the mode selection switch, to perform the automatic focus control continuously during the operation of the first operating member in a case where a second mode is selected by the mode selection switch, and to perform the automatic focus control in accordance with a first operation of the first operating member and to stop the automatic focus control in accordance with a second operation of the first operating member in a case where a third mode is selected by the mode selection switch.

7. The lens apparatus according to any one of claims 1 to 6, further comprising a third operating member, wherein the controller control is arranged to the actuator so that the second focusing lens is returned to a reference position in accordance with the operation of the third operating member when the automatic focus control has finished.

8. The lens apparatus according to any one of claims 1 to 7, wherein a manual focus mode in which only the manual focus is permitted and a combination focus mode in which the manual focus and automatic focus are permitted can be selectively set.

9. The lens apparatus according to claim 8, wherein the controller is arranged to control the actuator so that the second focusing lens is returned to a reference position in accordance with the switching from the combination focus mode to the manual focus mode.

10. An image-taking system comprising:
the lens apparatus according to any one of claims 1 to 9; and a camera which includes a image pick-up device, the lens apparatus being mounted on the camera.
